## Europäisches Patentamt
## European Patent Office
## Office européen des brevets

(11) Publication number: **0 062 633**
**B1**

(12) **EUROPEAN PATENT SPECIFICATION**

(45) Date of publication of patent specification: **27.05.87**  (51) Int. Cl.⁴: **B 60 R 16/02**

(21) Application number: **81900280.9**

(22) Date of filing: **20.10.80**

(86) International application number:
**PCT/US80/01396**

(87) International publication number:
**WO 82/01353 29.04.82 Gazette 82/11**

(54) **ARTICLE RESTRAINING DEVICE.**

(43) Date of publication of application:
**20.10.82 Bulletin 82/42**

(45) Publication of the grant of the patent:
**27.05.87 Bulletin 87/22**

(84) Designated Contracting States:
**DE FR GB**

(56) References cited:
**US-A-1 845 418**
**US-A-3 309 235**
**US-A-3 367 441**
**US-A-3 707 086**
**US-A-3 930 552**
**US-A-4 033 424**
**US-A-4 108 266**
**US-A-4 213 510**
**US-A-4 218 105**

(73) Proprietor: **CATERPILLAR INDUSTRIAL INC.**
**5960 Heisley Road**
**Mentor Ohio 44060 (US)**

(72) Inventor: **LESKOVEC, Edward V.**
**846 Stevens Boulevard**
**Eastlake, OH 44094 (US)**

(74) Representative: **Wagner, Karl H.**
**WAGNER & GEYER Patentanwälte**
**Gewuerzmuehlstrasse 5 Postfach 246**
**D-8000 München 22 (DE)**

Courier Press, Leamington Spa, England.

# Description

This invention relates generally to devices for securing the position of removable components of vehicles and more particularly, but not exclusively, to battery restraints for electrically powered lift trucks.

It is common for battery powered vehicles to be designed so as to permit simple and swift removal of their battery unit. Typically, the battery unit rests on the frame of the vehicle and is prevented from horizontal displacement by an enclosing frame. The battery unit is accessible from a vertical direction so that a hoisting device may be positioned thereover and the battery grasped for vertical removal.

Frequent removal of battery units is a necessity for those battery powered vehicles which are subject to around the clock usage. Currently available commercial battery units typically require several hours of recharging after a few hours of service. Extensive downtime for recharging can only be avoided by replacing a discharged battery unit with a charged one.

While it is necessary that the battery unit be easily removable from a vertical direction it is also important to ensure that the battery unit be restrained from unintended vertical displacement during operation of the vehicle. To decrease the possibility of such displacement of the battery unit several restraining devices have been developed. The most relevant devices are shown in US—A—3,930,552, US—A—4,033,424 and US—A—4,108,266. Specifically, US—A—3,930,552 relates to a motor vehicle battery holder for a vehicle having a main frame. A removable component is present in the form of a battery which is removable in a horizontal direction. A cover is attached to the vehicle and is movable to an operating position covering said removable battery. Moreover, an enclosure frame is used which surrounds said battery. In addition, restraining means are adapted to be moved into a restraining position, and locking means are provided for movement between a restraining means locking position and a restraining means releasing position. The locking means prevent closure of the cover when in the releasing position.

While the cited patents disclose effective battery unit restraining devices it would be advantageous were they less complex in construction. It would also be beneficial if the restraining device could not unintentionally be left in an unlocked condition.

The present invention is directed to overcoming one or more of the problems set forth above.

Disclosure of the Invention

The present invention provides an article restraining device as set forth in claim 1. Preferred embodiments are claimed in the dependent claims. When in a restraining position this device will permit movement of the cover to its operating position and when not in a restraining position this device will preclude such movement of the cover to its fully operational position.

Brief Description of the Drawings

For a better understanding of the present invention, reference may be had to the accompanying drawings in which:

Fig. 1 is a top diagrammatic view of an embodiment of the present invention;

Fig. 2 is a vertical sectional view taken along lines II—II of Fig. 1;

Fig. 3 is an enlarged partial diagrammatic top view of an alignment end of a restraining device in an engaged position with a cover shown in phantom outline;

Fig. 4 is a diagrammatic cross sectional view taken along line IV—IV of Fig. 3;

Fig. 5 is an enlarged diagrammatic sectional detail view of a locking end of the restraining device in the engaged position shown in Fig. 1;

Fig. 6 corresponds to Fig. 2 and shows the restraining device in a first stage of removal;

Fig. 7 corresponds to Fig. 6 and shows the restraining device in a second stage of removal; and

Fig. 8 corresponds to Fig. 7 and shows the restraining device totally removed.

Best Mode For Carrying Out the Invention

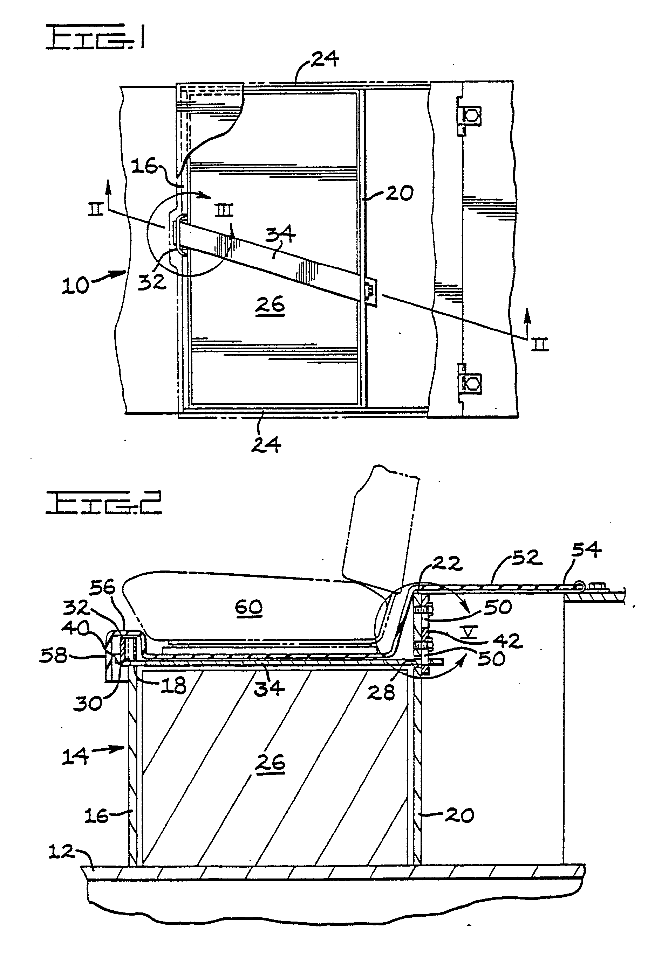

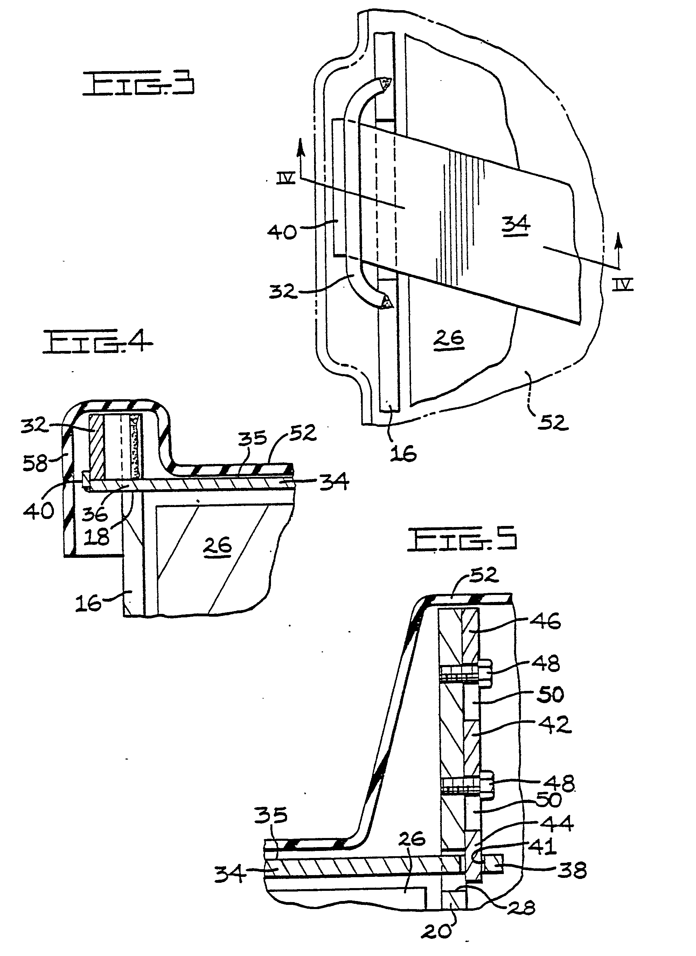

Referring to Figures 1 and 2 an article restraining device 10 which is one embodiment of the present invention is shown mounted on a lift truck having a main frame 12 supporting a battery enclosure frame 14. The battery enclosure frame 14 includes a plurality of upwardly extending frame members, preferably a front wall 16 having an upper edge 18, a rear wall 20 having an upper edge 22, and side walls 24. A removable component such as a battery 26 is positioned in the battery enclosure frame 14.

The rear wall 20 has a rear aperture 28. Similarly, the front wall 16 has a front aperture 30. These apertures 28, 30 are preferably of equal elevation, and are positioned so that a line segment joining them is angularly related to the longitudinal axis of the lift truck and passes above the battery 26 when positioned within the enclosure frame 14.

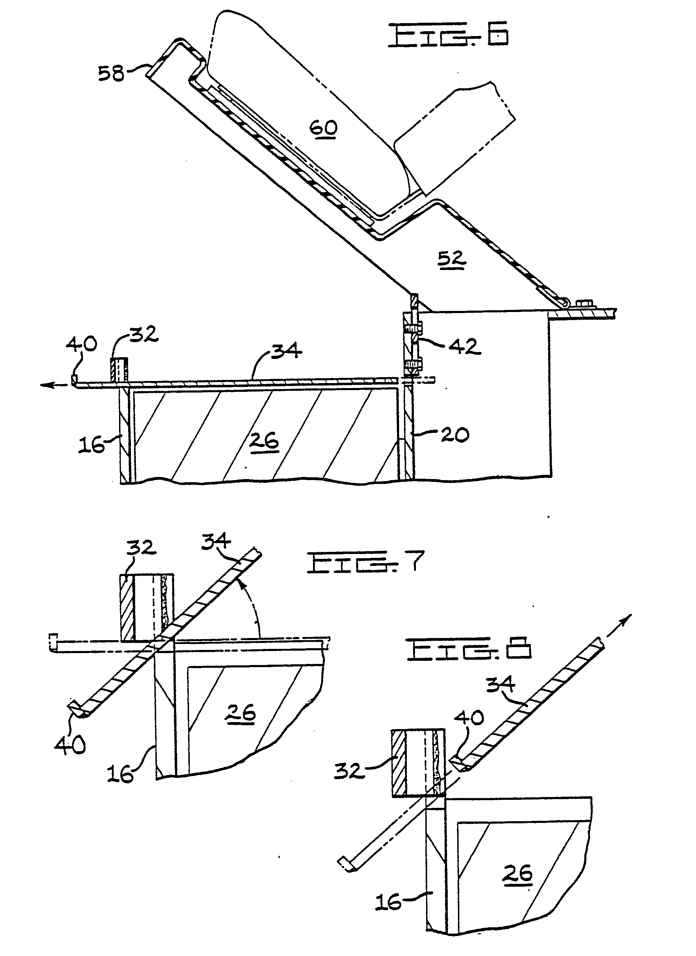

In the preferred embodiment, best detailed in Figures 3 and 4, the front aperture 30 takes the form of a slot bounded below by the upper edge 18 of the front wall 16, and bounded above by an upper constraining strap 32. The upper constraining strap 32 is an elongated bar of metal joined by welding or the like to the front wall 16 and extending forward and upward from the front wall 16 so as to provide both horizontal and vertical clearance between the front wall upper edge 18 and the upper constraining strap 32.

A restraining bar 34 having an upper surface 35 passes through the front and rear apertures 28, 30. It should be of sufficient strength that when properly engaged in these apertures 28, 30 it can withstand the shock loading imposed when the battery 26 is forced against it. The restraining bar 34 is sized with respect to the apertures 28, 30 so that while easily slidable therethrough, only insignificant transverse motion of the bar 34 is possible.

The restraining bar 34 has a first end portion 36 engageable in the front aperture 30 and a second end portion 38 engageable in the rear aperture 28. The first end portion 36 has a stop 40 for contacting the restraining bar 34. The purpose of this stop 40 is to prevent the front end portion 36 from passing out of the front aperture 30 when the restraining bar 34 is moved toward the rear aperture 28. It also serves to insure proper longitudinal alignment of the restraining bar 34 within the two apertures 28, 30. With the stop 40 abutting the upper constraining strap 32, the restraining bar 34 is in an engaged position. This stop 40 can assume many forms but is preferably fashioned as a slight upward extension of the restraining bar 34 as best shown in Figure 4.

The restraining bar 34 also has a locking bar aperture 41 disposed in a portion of the restraining bar 34 so located that it is adjacent the rear aperture 28 when the restraining bar 34 is in the engaged position. A locking bar 42 having lower portion 44 and an upper portion 46 is slidably attachable to the rear wall 20. This is preferably achieved with bolts 48 fixable to the rear wall 20 disposed through vertically elongated slots 50 in the locking bar 42. With the bolts 48 slightly loosened the locking bar 42 may slidably be moved vertically into and out of the locking bar aperture 41. With the locking bar 42 disposed in the locking bar aperture 41, the restraining bar 34 is locked in the engaged position.

As best shown in Figure 2, a cover 52 is pivotally attached to the main frame 12. This cover is selectively positionable between an operating position in which it overlies the battery 26 and a battery removal position. The cover 52 has a rearward hinged end 54 and a forward end 56. The forward end 56 has a downwardly extending edge portion 58 which is sized so that when the cover 52 is in the operating position and the restraining bar 34 is in the engaged position, the downwardly extending edge portion 58 is slightly forward of and extends to a lower elevation than the restraining bar first end portion 36. An operator's seat 60 is mounted on said cover 52 and is movable therewith.

The locking bar 42 extends upwardly a sufficient distance, as is shown in Figures 5 and 6, to interfere with the cover 52 preventing it from being placed in the operating position when the locking bar 42 is in abutment with the restraining bar upper surface 35.

Industrial Applicability

The article restraining device 10 described above is suited for restraining a vehicle component which must be frequently removed. It is particularly suited for use as a lift truck battery restraining device.

When in its locked position, the article restraining device 10 secures the battery unit 26 against vertical displacement. To ensure that the vehicle is not operated without the battery unit 26 being restrained from such displacement, the cover 52 carrying the operator's seat 60, which must be pivoted away from its operating position to remove the battery unit 26, cannot be repositioned to its operating position unless the restraining bar 34 is locked in the engaged position. The operator is thereby made aware when the battery unit 26 is not properly restrained.

This warning to the operator is accomplished in different manners for the two basic situations in which the restraining bar 36 is not locked in place. When the restraining bar 36 physically occupies the engaged position (that is, when it passes through both apertures 28, 30 with the stop 40 abutting the upper constraining strap 32) but the locking bar 42 is not within the locking bar aperture 41, the locking bar 42, as is shown in Fig. 6, projects upward into the area normally occupied by the cover 52 when in its operating position. This prevents repositioning of the cover 52 to its operating position when the locking bar 42 is disengaged. Additionally, when the restraining bar 36 does not occupy the engaged position, the stop 40 and the first end portion 36 extend away from the first aperture 30 into an area normally occupied by the downwardly extending edge portion 58 of the cover 52 thereby preventing placement of the cover 52 in its operating position.

The first aperture 30 is designed to permit the restraining bar 36 to be totally withdrawn without the necessity for pulling it translationally along its length through the first aperture 30. This is advantageous in that it obviates the necessity for providing an amount of lateral clearance forward from the enclosure frame 14 equal to the length of the restraining bar 34. This removal is accomplished by withdrawing the restraining bar 34 from the rear aperture 28, rotating the restraining bar 34 so as to raise its second end portion 38 and then pulling the bar 34 through the front aperture 30. This is shown sequentially in Figures 6—8.

**Claims**

1. An article restraining device (10) for a vertically removable component (26) of a vehicle having a main frame (12), comprising:

a cover (52) attached to said vehicle and movable to an operating position overlying said removable component (26);

an enclosure frame (14) having at least a pair of spaced upwardly extending frame members (16, 20) connected to said main frame (12), one of said pair having a first aperture (30) disposed therein and the other of said pair having a second aperture (28) disposed therein;

restraining means (34) movable to a restraining position at which it passes through said apertures (30, 28) and overlies said removable component (26), said restraining means (34) permitting movement of said cover (52) to said operating position only when said restraining means (34) occupies said restraining position;

a locking means (42) adjacent one of said apertures (28, 30) and movable between a restraining bar (34) locking position and a restraining bar (34) releasing position,

said locking means (42) restraining said cover (52) from being moved to said operating position when said locking means (42) is in said restraining bar (34) releasing position.

2. The article restraining device (10) of claim 1 wherein said removable component (26) is a battery unit.

3. The article restraining device (10) of claim 1 or 2 wherein said vehicle is a lift truck.

4. The article restraining device (10) of any one of claims 1 to 3, wherein said cover (52) includes an operator's seat (60) mounted thereon, said cover (52) being pivotally attached to said main frame (12).

5. The article restraining device (10) of any one of claims 1 to 4 wherein said cover (52) is selectively movable between said operating position and a position in which said cover (52) is free from intersection with a vertical projection of said removable component (26).

6. The article restraining device (10) of any one of claims 1 to 5 wherein said restraining means (34) includes a restraining bar (34) having a first end portion (36) and a second end portion (38), said first end portion (36) having a stop (40) attached thereto such that further movement of said restraining bar (34) through said first aperture (30) and toward said second aperture (28) is prevented when said stop (40) contacts said enclosure frame (14) adjacent said first aperture (30).

7. The article restraining device (10) of any preceding claim wherein said locking means (42) is connected to one of said upwardly extending members (16, 20).

8. The article restraining device (10) of any preceding claim wherein said locking means (42) includes a locking bar (42) connected to said enclosure frame (14) movable to engage said restraining bar (34).

9. The article restraining device (10) of claim 8 wherein said restraining bar (34) has a locking bar aperture (41) into which said locking bar (42) is positionable.

10. The article restraining device (10) of claim 6 or any preceding claim when dependent on claim 6 wherein said cover (52) abuts said first end portion (36) preventing said cover (52) from attaining said operating position unless said stop (40) is substantially in contact with said enclosure frame (14).

11. The article restraining device (10) of claim 10 wherein said cover (52) includes a downwardly extending edge portion (58) which extends to a position elevationally lower than said restraining bar (34), said downwardly extending edge portion (58) when in said operating position being removed a horizontal distance from said restraining bar (34).

12. The article restraining device (10) of claim 6 or any preceding claim when dependent on claim 6 wherein said first aperture (30) is defined by an upper constraining strap (32) and a lower plate (16) said upper constraining strap (32) being spaced a vertical and a horizontal distance from said lower plate (16) such that said first end portion (36) having said stop (40) is passable through said first aperture (30) only when said second end portion (32) is free from engagement in said second aperture (28).

13. The article restraining device (10) according to any preceding claim wherein said frame members (16, 20) border said removable component (26), and interfering means (58) are provided for preventing said cover (52) from attaining said operating position when said locking means (42) is free from engagement with said restraining means (34).

14. The article restraining device (10) of claim 13 wherein said interfering means (58) includes a downwardly extending edge portion connected to said cover (52).

## Patentansprüche

1. Vorrichtung (10) zum Festhalten eines Gegenstandes für ein vertikal entfernbares Bauteil (26) eines Fahrzeugs mit einem Hauptrahmen (12), wobei folgendes vorgesehen ist:

Eine Abdeckung (52) befestigt am Fahrzeug und in eine Betriebsposition über dem entfernbaren Bauteil (26) bewegbar,

ein Umschließungsrahmen (14) mit mindestens einem Paar von mit Abstand sich nach oben erstreckenden Rahmengliedern (16, 20) die mit dem Hauptrahmen (12) verbunden sind, wobei eines des Paars eine darinnen angeordnete erste Öffnung (30) aufweist und das andere des Paars eine darinnen angeordnete zweite Öffnung (28) aufweist,

Haltemittel (34) bewegbar in eine Halteposition in der sie durch die Öffnungen (30, 28) verlaufen und über dem entfernbaren Bauteil (26) liegen, wobei die Haltemittel (34) die Bewegung der Abdeckung (52) in die Betriebsposition nur dann gestatten, wenn die Haltemittel (34) die erwähnte Halteposition einnehmen,

Verriegelungsmittel (42) benachbart zu einer der Öffnungen (28, 30) und zwischen einer Haltestangen-(34)-Verriegelungsposition. und einer Haltestangen-(34)-Freigabeposition bewegbar,

wobei die Verriegelungsmittel (42) die Abdeckung (52) gegenüber einer Bewegung in die Betriebsposition einschränken wenn die Verriegelungsmittel (42) sich in der Haltestangen-(34)-Freigabeposition befinden.

2. Vorrichtung (10) zum Festhalten eines Gegenstandes nach Anspruch 1 wobei das entfernbare Bauteil (26) eine Batterieeinheit ist.

3. Vorrichtung (10) zum Festhalten eines Gegenstandes nach Anspruch 1 oder 2 wobei das Fahrzeug ein Hubstapler ist.

4. Vorrichtung (10) zum Festhalten eines Gegenstandes nach einem der Ansprüche 1 bis 3 wobei die Abdeckung (52) einen darauf angeordneten Fahrersitz (60) aufweist und wobei die Abdeckung (52) schwenkbar am Hauptrahmen (12) angeordnet ist.

5. Vorrichtung (10) zum Festhalten eines Gegenstandes nach einem der Ansprüche 1 bis 4 wobei die Abdeckung (52) wahlweise zwischen der Betriebsposition und einer Position bewegbar ist, in der die Abdeckung (52) frei ist gegenüber einem Schnitt mit einer Vertikalprojektion des entfernbaren Bauteil (26).

6. Vorrichtung (10) zum Festhalten eines Gegenstandes nach einem der Ansprüche 1 bis 5 wobei die Haltemittel (34) eine Haltestange (34) aufweisen mit einem ersten Endteil (36) und einem zweiten Endteil (38), wobei der erste Endteil (36) einen Anschlag (40) daran befestigt derart aufweist, daß die weitere Bewegung der Haltestange (34) durch die erste Öffnung (30) und zur zweiten Öffnung (28) hin dann verhindert wird, wenn der Anschlag (40) den Umschließungsrahmen (14) benachbart zu der ersten Öffnung (30) kontaktiert.

7. Vorrichtung (10) zum Festhalten eines Gegenstandes nach einem vorhergehenden Anspruch wobei die Verriegelungsmittel (42) mit einem der sich nach oben erstreckenden Glieder (16, 20) verbunden sind.

8. Vorrichtung (10) zum Festhalten eines Gegenstandes nach einem vorhergehenden Anspruch wobei die Verriegelungsmittel (42) eine Verriegelungsstange (42) verbunden mit dem Umschließungsrahmen (14) aufweisen und zwar bewegbar zum Eingriff mit der Haltestange (34).

9. Vorrichtung (10) zum Festhalten eines Gegenstandes nach Anspruch 8 wobei die Haltestange (34) eine Verriegelungsstangenöffnung (41) aufweist in der die Verriegelungsstange (42) positionierbar ist.

10. Vorrichtung (10) zum Festhalten eines Gegenstandes nach Anspruch 6 oder einem vorhergehenden Anspruch bei Abhängigkeit von Anspruch 6 wobei die Abdeckung (52) sich an dem ersten Endteil (36) anstößt und verhindert, daß die Abdeckung (52) die Betriebsposition einnimmt wenn nicht der Anschlag (40) im wesentlichen in Kontakt mit dem Umschließungsrahmen (14) steht.

11. Vorrichtung (10) zum Festhalten eines Gegenstandes nach Anspruch 10 wobei die Abdeckung (52) einen sich nach unten erstreckenden Kantenteil (58) aufweist, der sich in eine Position erstreckt die höhenmäßig tiefer liegt als die Haltestange (34), und wobei der sich nach unten erstreckende Kantenteil (58) in seiner Betriebsposition um einen Horizontalabstand gegenüber der Haltestange (34) angeordnet ist.

12. Vorrichtung (10) zum Festhalten eines Gegenstandes nach Anspruch 6 oder einem vorhergehenden Anspruch bei Abhängigkeit von Anspruch 6 wobei die erste Öffnung (30) durch einen oberen Halte- oder Einschränkstreifen (32) und einer unteren Platte (16) gebildet ist, wobei der obere Haltestreifen (32) mit einem Vertikal- und einem Horizontalabstand gegenüber der unteren Platte (16) derart angeordnet ist, daß der erste Endteil (36) mit dem Anschlag (40) durch die erste Öffnung (30) nur dann hindurchführbar ist, wenn der zweite Endteil (32) vom Eingriff mit der zweiten Öffnung (28) frei ist.

13. Vorrichtung (10) zum Festhalten eines Gegenstandes nach einem vorhergehenden Anspruch wobei die Rahmenglieder (16, 20) an dem entfernbaren Bauteil (26) angrenzen und Sperrmittel (58) vorgesehen sind um zu verhindern, daß die Abdeckung (52) die Betriebsposition erreicht wenn die Verriegelungsmittel (42) vom Eingriff mit den Haltemitteln (34) frei sind.

14. Vorrichtung (10) zum Festhalten eines Gegenstandes nach Anspruch 13 wobei die Sperrmittel (58) einen mit der Abdeckung (52) verbundenen sich nach unten erstreckenden Kantenteil aufweisen.

**Revendications**

1. Dispositif de retenue d'objet (10) pour un élément amovible verticalement (26) d'un véhicule pourvu d'un châssis principal (12), comportant:

un couvercle (52) fixé audit véhicule et déplaçable dans une position de fonctionnement recouvrant ledit élément amovible (26);

un châssis formant boîte (14) pourvu d'au moins deux éléments de châssis espacés (16, 20) allongés vers le haut et reliés audit châssis principal (12), dont l'un possède un premier orifice (30) ménagé sur lui et l'autre un second orifice (28) ménagé sur lui;

un moyen de retenue (34) déplaçable dans une position de retenue au niveau de laquelle il traverse lesdits orifices (30, 28) et recouvre ledit élément amovible (26), ledit moyen de retenue (34) ne permettant un déplacement dudit couvercle (52) dans ladite position de fonctionnement que lorsqu'il occupe ladite position de retenue;

un moyen de blocage (42) adjacent à l'un desdits orifices (28, 30) et déplaçable entre une position de blocage de barre de retenue (34) et une position de déblocage de barre de retenue (34),

ledit moyen de blocage (42) empêchant, lorsqu'il est dans ladite position de déblocage de barre de retenue (34), que ledit couvercle (52) soit déplacé dans ladite position de fonctionnement.

2. Dispositif de retenue d'objet (10) selon la revendication 1, dans lequel ledit élément amovible (26) est un bloc de batterie.

3. Dispositif de retenue d'objet (10) selon la revendication 1 ou 2, dans lequel ledit véhicule est un chariot élévateur.

4. Dispositif de retenue d'objet (10) selon l'une quelconque des revendications 1 à 3, dans lequel ledit couvercle (52) comporte, monté sur lui, un siège de conducteur (60), ledit couvercle (52) étant fixé à pivotement audit châssis principal (12).

5. Dispositif de retenue d'objet (10) selon l'une quelconque des revendications 1 à 4, dans lequel ledit couvercle (52) est déplaçable sélectivement entre ladite position de fonctionnement et une position dans laquelle il n'a pas d'intersection avec une projection verticale dudit élément amovible (26).

6. Dispositif de retenue d'objet (10) selon l'une quelconque des revendications 1 à 5, dans lequel ledit moyen de retenue (34) comprend une barre de retenue (34) pourvue d'une première partie d'extrémité (36) et d'une seconde partie d'extrémité (38), ladite première partie d'extrémité (36) possédant une butée (40) fixée à elle, de sorte qu'il est impossible de déplacer davantage ladite barre de retenue (34) dans ledit premier orifice (30) et en direction dudit second orifice (28), lorsque ladite butée (40) est en contact avec ledit châssis formant boîte (14) à proximité dudit premier orifice (30).

7. Dispositif de retenue d'objet (10) selon l'une quelconque des revendications précédentes, dans lequel ledit moyen de blocage (42) est relié à l'un desdits éléments allongés vers le haut (16, 20).

8. Dispositif de retenue d'objet (10) selon l'une quelconque des revendications précédentes, dans lequel ledit moyen de blocage (42) comprend une barre de blocage (42) reliée audit châssis formant boîte (14) et déplaçable pour mettre en prise ladite barre de retenue (34).

9. Dispositif de retenue d'objet (10) selon la revendication 8, dans lequel ladite barre de retenue (34) possède un orifice de barre de blocage (41) dans lequel ladite barre de blocage (42) peut être positionnée.

10. Dispositif de retenue d'objet (10) selon la revendication 6 ou l'une quelconque des revendications précédentes lorsqu'elles sont dépendantes de la revendication 6, dans lequel ledit couvercle (52) vient en butée contre ladite première partie d'extrémité (36) qui l'empêche d'at- teindre ladite position de fonctionnement, sauf si ladite butée (40) est sensiblement en contact avec ledit châssis formant boîte (14).

11. Dispositif de retenue d'objet (10) selon la revendication 10, dans lequel ledit couvercle (52) comprend une partie formant bord allongée vers le bas (58) qui s'étend jusqu'en un point inférieur en hauteur à ladite barre de retenue (34), ladite partie formant bord allongée vers le bas (58) étant, lorsqu'elle se trouve dans ladite position de fonctionnement, décalée d'une distance horizontale par rapport à ladite barre de retenue (34).

12. Dispositif de retenue d'objet (10) selon la revendication 6 ou l'une quelconque des revendications précédentes lorsqu'elles sont dépendantes de la revendication 6, dans lequel ledit premier orifice (30) est défini par un étrier de retenue supérieur (32) et une plaque inférieure (16), ledit étrier de retenue supérieur (32) étant espacé d'une distance verticale et horizontale par rapport à ladite plaque inférieure (16), de sorte que ladite première partie d'extrémité (36) possédant ladite butée (40) ne peut traverser ledit premier orifice (30) que lorsque ladite seconde partie d'extrémité (32) n'est pas en prise dans ledit second orifice (28).

13. Dispositif de retenue d'objet (10) selon l'une quelconque des revendications précédentes, dans lequel lesdits éléments de châssis (16, 20) encadrent ledit élément amovible (26), et des moyens faisant obstacle (58) sont prévus pour empêcher ledit couvercle (52) d'atteindre ladite position de fonctionnement, lorsque ledit moyen de blocage (42) n'est pas en prise avec ledit moyen de retenue (34).

14. Dispositif de retenue d'objet (10) selon la revendication 13, dans lequel ledit moyen faisant obstacle (58) comporte une partie formant bord allongée vers le bas et reliée audit couvercle (52).

0 062 633

# FIG.1

# FIG.2

1

FIG.3

FIG.4

FIG.5

FIG. 6

FIG. 7

FIG. 8